(19) Europäisches Patentamt / European Patent Office / Office européen des brevets

(11) **EP 1 515 159 B1**

(12) **EUROPÄISCHE PATENTSCHRIFT**

(45) Veröffentlichungstag und Bekanntmachung des Hinweises auf die Patenterteilung:
**04.06.2008 Patentblatt 2008/23**

(51) Int Cl.:
***G01S 13/90*** *(2006.01)*

(21) Anmeldenummer: **04019660.2**

(22) Anmeldetag: **19.08.2004**

(54) **Verfahren zur Verringerung des Dopplerzentroids bei einem kohärenten Impuls-Radarsystem**

Method for reducing the doppler centroid for coherent pulsed radar system

Méthode pour réduire le centroide doppler pour des systèmes radar coherent à impulsion

(84) Benannte Vertragsstaaten:
**DE FR GB IT NL**

(30) Priorität: **09.09.2003 DE 10341893**

(43) Veröffentlichungstag der Anmeldung:
**16.03.2005 Patentblatt 2005/11**

(73) Patentinhaber: **Deutsches Zentrum für Luft- und Raumfahrt e.V.**
**51147 Köln (DE)**

(72) Erfinder:
• **Fiedler, Hauke, Dr.**
**81377 München (DE)**
• **Börner, Elke, Dipl.-Ing.**
**98667 Schönbrunn (DE)**
• **Mittermayer, Josef, Dr.**
**81249 München (DE)**
• **Krieger, Gerhard, Dr.**
**82152 Planegg (DE)**

(74) Vertreter: **von Kirschbaum, Albrecht**
**Patentanwalt**
**Postfach 1520**
**82102 Germering (DE)**

(56) Entgegenhaltungen:
• **CHANG C Y ET AL: "Attitude Steering For Space Shuttle Based Synthetic Aperture Radars" INTERNATIONAL SPACE YEAR : SPACE REMOTE SENSING. HOUSTON, MAY 26 - 29, 1992, PROCEEDINGS OF THE INTERNATIONAL GEOSCIENCE AND REMOTE SENSING SYMPOSIUM (IGARSS), NEW YORK, IEE, US, Bd. VOL. 1 SYMP. 12, 26. Mai 1992 (1992-05-26), Seiten 297-301, XP010101054 ISBN: 0-7803-0138-2**
• **D'ERRICO M ET AL: "The BISSAT mission: a bistatic SAR operating in formation with COSMO/ SkyMed X-band radar 12" IEEE, Bd. 2, 9. März 2002 (2002-03-09), Seiten 809-818, XP010604549**
• **BOERNER E ET AL: "Evaluation of TerraSAR-X spotlight processing accuracy based on a new spotlight raw data simulator" IGARSS 2003. IEEE 2003 INTERNATIONAL GEOSCIENCE AND REMOTE SENSING SYMPOSIUM. PROCEEDINGS. TOULOUSE, FRANCE, JULY 21 - 25, 2003, IEEE INTERNATIONAL GEOSCIENCE AND REMOTE SENSING SYMPOSIUM, NEW YORK, NY : IEEE, US, Bd. VOL 7 OF 7, 21. Juli 2003 (2003-07-21), Seiten 1323-1325, XP010703735 ISBN: 0-7803-7929-2**
• **RUNGE H: "Benefits Of Antenna Yaw Steering For SAR" GEOSCIENCE AND REMOTE SENSING SYMPOSIUM, 1991. IGARSS '91. REMOTE SENSING: GLOBAL MONITORING FOR EARTH MANAGEMENT., INTERNATIONAL JUNE 3-6, 1991, NEW YORK, NY, USA,IEEE, US, 3. Juni 1991 (1991-06-03), Seiten 257-261, XP010040985 ISBN: 0-87942-675-6**

## Beschreibung

Die Erfindung betrifft ein Verfahren zur Verringerung des Dopplerzentroids bei einem kohärenten Impuls-Radarsystem mit synthetischer Apertur, das von einer sich bewegenden Satellitenplattform getragen wird und mit seiner Radarantenne einen Bodenstreifen mit zumindest annähernd konstanter Fluggeschwindigkeit abtastet, unter Verwendung sowohl einer Yaw-Winkel-Steuerung als auch einer Pitch-Winkel-Steuerung.

Die Erfindung betrifft auch die Verwendung des erfindungsgemäßen Verfahrens.

Radarsysteme mit synthetischer Apertur (SAR; Synthetic Aperture Radar) dienen als Instrumente zur Fernerkundung, welche in immer größerem Maße bei der Abbildung, Überwachung und Untersuchung der Erdoberfläche eingesetzt werden. Ein solches SAR-System besteht aus einem Träger, der sich mit konstanter Geschwindigkeit bewegt, einer orthogonal zur Bewegungsrichtung blickenden Radarantenne und einem kohärenten Radarsystem, welches periodisch elektromagnetische Impulse aussendet.

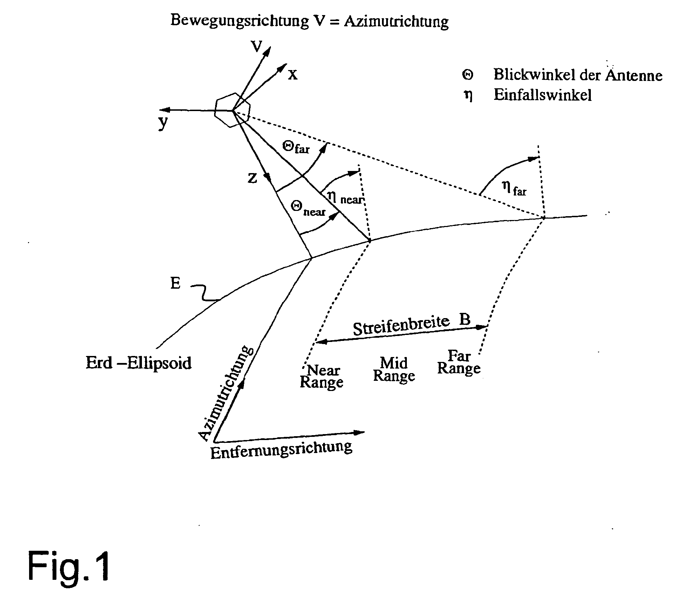

Fig.1 veranschaulicht die geometrischen Zusammenhänge für ein satellitengetragenes Radar mit synthetischer Apertur. Die Bewegungsrichtung V des Trägers, also eines Satelliten S, wird als Azimutrichtung und die dazu orthogonale, schräg nach unten weisende Richtung als Entfernungsrichtung bezeichnet. Die Szenenausdehnung in Entfernungsrichtung am Boden des Erd-Ellipsoids E wird als Streifenbreite B bezeichnet und umfasst dasjenige Gebiet am Boden, welches den gesamten Datenaufnahmebereich darstellt.

Das Gebiet, welches sich am nächsten zum Sender in der Streifenbreite B befindet, wird als "Near-Range" bezeichnet, dasjenige in der Streifenmitte als "Mid-Range" und jenes am Ende der Streifenbreite B als "Far-Range". Als Blickwinkel $\Theta$ der Antenne wird der Winkel zwischen der z-Achse des kartesischen x-y-z-Koordinatensystems des Satelliten S und der Hauptstrahlrichtung der Antenne bezeichnet. Der Einfallswinkel $\eta$ am Boden wird durch die Hauptstrahlrichtung der Antenne und die Flächennormale auf der Erdoberfläche definiert. Der größte Blickwinkel der SAR-Antenne ist also $\Theta_{far}$ und der kleinste Blickwinkel $\Theta_{near}$; entsprechend ist der Einfallswinkel am inneren Rand des Streifens $\eta_{near}$ und am äußeren Rand $\eta_{far}$.

Beim Radar mit synthetischer Apertur wird das sogenannte Dopplerspektrum zu einem Punktziel ausgewertet, welches aus Dopplerfrequenzen gebildet wird. Unter Dopplerfrequenz versteht man im monostatischen Fall die zweifach negative Entfernungsvariation zwischen Radarsensor und Punktziel pro Zeiteinheit, geteilt durch die verwendete Wellenlänge. Es gilt also die folgende Gleichung:

$$f_{dop} = -\frac{2}{\lambda}\frac{dr}{dt},$$

wobei $f_{dop}$ die Dopplerfrequenz, $\lambda$ die Wellenlänge, $r$ die Entfernung vom Radarsensor zum Punktziel und $t$ die Zeit darstellen. Die zentrale Frequenz des Dopplerspektrums wird als Dopplerzentroid bezeichnet. Eine Dopplerfrequenz von 0 Hz wird auch als Doppler Null bezeichnet. Für die Prozessierung wird ein möglichst geringer Dopplerzentroid angestrebt, im Idealfall also 0 Hz, welcher über die Entfernung möglichst keine Variation zeigen soll.

Wird der Sender auf einer Satellitenplattform angeordnet, so durchläuft dieser wie der Satellit selbst im allgemeinen einen elliptischen Orbit um die Erde. Auf Grund der Erddrehung kommt es zu einer Verschiebung des Dopplerspektrums.

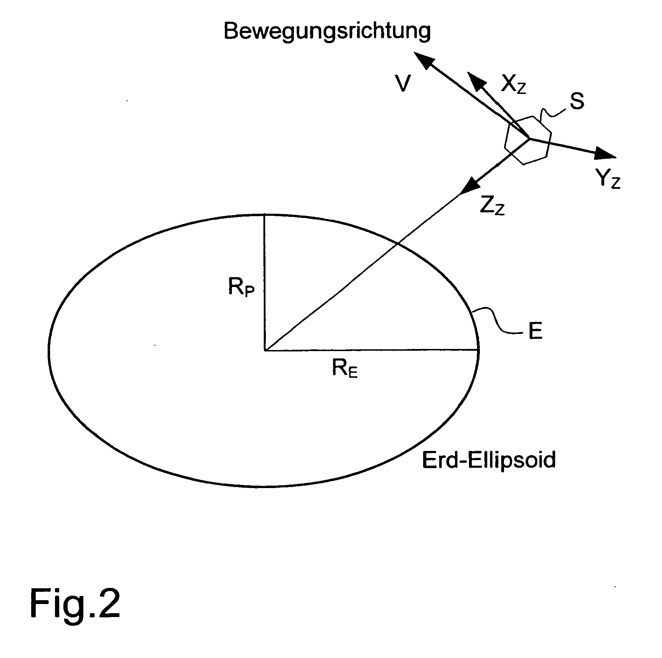

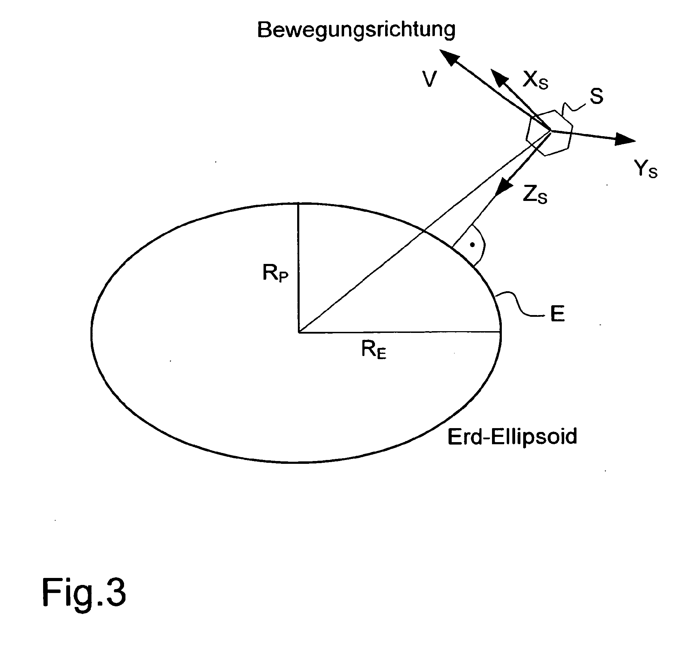

Als Koordinatensystem für einen Satelliten wird zumeist entweder das sogenannte Z-System, das in Fig.2 schematisch dargestellt ist, oder das sogenannte S-System gewählt, das in Fig.3 dargestellt ist. Es wird hierbei meist ein ellipsoides Erdmodell E verwendet, welches die Halbachsen $R_P$ und $R_E$ aufweist. Diese beiden Satellitenkoordinatensysteme sind bekanntlich folgendermaßen definiert:

Bei dem in Fig.2 abgebildeten Z-System zeigt die $Z_Z$-Achse des Koordinatensystems vom Satellit S direkt zum Zentrum der Erde. Die $Y_Z$-Achse wird durch das Kreuzprodukt der Z-Achse mit dem Geschwindigkeitsvektor des Satelliten S und die $X_Z$-Achse durch das Kreuzprodukt der $Y_Z$-Achse mit der $Z_Z$-Achse gebildet. Damit erhält man ein rechtshändiges kartesisches Koordinatensystem.

Dagegen zeigt bei dem in Fig.3 dargestellten S-System die $Z_S$-Achse des Koordinatensystems vom Satellit S senkrecht auf die Erdoberfläche, wobei meistens ein ellipsoides Erdmodell zu Grunde gelegt wird. Die $Y_S$-Achse wird auch hier durch das Kreuzprodukt der $Z_S$-Achse mit dem Geschwindigkeitsvektor des Satelliten S und die $X_S$-Achse durch das Kreuzprodukt der $Y_S$-Achse mit der $Z_S$-Achse gebildet. Damit erhält man auch hier ein rechtshändiges kartesisches Koordinatensystem.

Die Verschiebung des Dopplerzentroids aus Doppler Null wird zumeist durch das sogenannte Yaw-Steering auszugleichen versucht, also einer Steuerung des Yaw-Winkels (Gierwinkel). Um die Variation des Dopplerzentroiden über die gesamte Streifenbreite möglichst gering zu halten, wäre es von Vorteil das Yaw-Steering für die Mitte der Streifenbreite durchzuführen. Dies führt jedoch dazu, dass für links- und rechts-blickende Antennen unterschiedliche Steuerungsformeln erforderlich wären. In derzeit gebräuchlichen SAR-Systemen wird das Yaw-Steering deshalb für einen Blickwinkel von 0° durchgeführt, was zwar einen größeren residualen Dopplerzentroid zur Folge hat als ein Yaw-Steering zur Mitte der Streifenbreite, aber für links- und rechts-blickende Antennen gleichermaßen anwendbar ist.

Die Entfernung zu dem Gebiet, für welches das Yaw-Steering durchgeführt wird und für welches sich ein residualer Dopplerzentroid von 0 Hz einstellt, wird im Folgenden als Referenzentfernung bezeichnet.

Beim Yaw-Steering in derzeit üblichen SAR-Systemen wird die Sendeantenne also durch eine Drehung um die z-Achse so gesteuert, dass der Dopplerzentroid für einen Blickwinkel von 0° auf der Erdoberfläche Null wird. Dies wird durch die Näherungsformel

$$yaw = \arctan\left(\frac{\sin i \cos u}{N - \cos i}\right)$$

beschrieben und ist, wie schon erwähnt worden ist, für links-blickende und rechts-blickende Antennen gleichermaßen anwendbar. Hierbei steht $i$ für die Inklination, $N$ bezeichnet die Anzahl der Umläufe des Satelliten pro Tag und $u$ steht für das Argument der Breite und bezeichnet die Summe aus der wahren Anomalie $\upsilon$ und dem Argument des Perigäums $\omega$. Eine Drehung um einen Vektor ist dabei als positiv definiert, wenn in Blickrichtung des Vektors gegen den Uhrzeigersinn gedreht wird. Das Yaw-Steering kann auch für eine vorgegebene Referenzentfernung mit $\Theta \neq 0°$ durchgeführt werden.

Dabei ergibt sich für Gebiete bei Entfernungen, die von der Referenzentfernung abweichen, ein restlicher Dopplerzentroid, der im Folgenden als residualer Dopplerzentroid bezeichnet wird. Dieser residuale Dopplerzentroid erfordert zusätzlichen Aufwand bei der Prozessierung der SAR-Daten und kann die Ergebnisse verschlechtern.

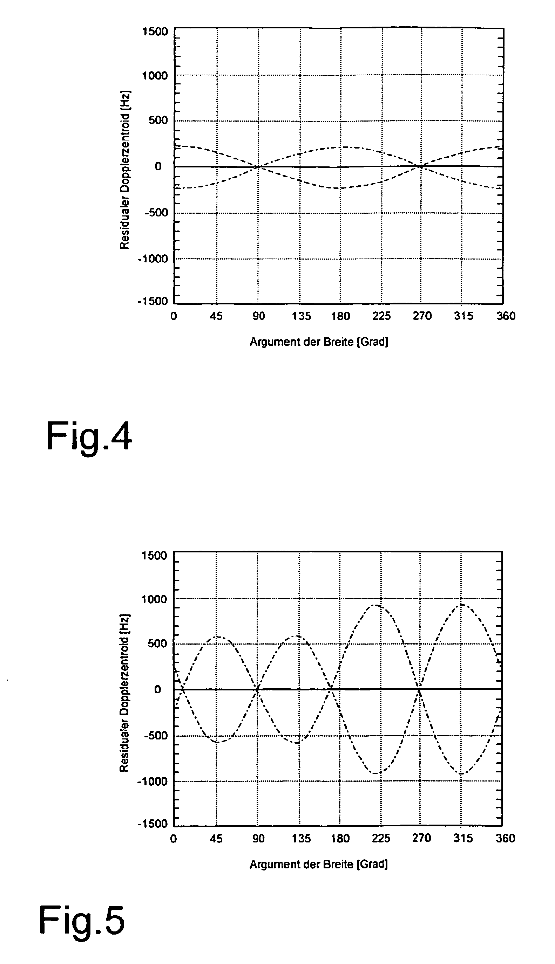

In Fig.4 ist der residuale Dopplerzentroid in [Hz] für das Z-Koordinatensystem und in Fig.5 für das S-Koordinatensystem dargestellt. Hierbei wird ein Orbit mit einer großen Halbachse von 6892,137km, einer Exzentrizität von 0,001 und einer Inklination von 97,44° angenommen. Im einzelnen wird hier auf die am Ende dieses Absatzes angegebene Tabelle verwiesen. Für diesen Satelliten wird der Yaw-Winkel numerisch so berechnet, dass der Dopplerzentroid im Mid-Range-Blickwinkelbereich, hier für einen Blickwinkel von 33,8°, Null wird. Mit diesem Yaw-Winkel wird anschließend der residuale Dopplerzentroid für einen Near-Range-Blickwinkel von 18,5° und Far-Range-Blickwinkel von 49,4° berechnet. Diese typischen Blickwinkelwerte geben für den gewählten Orbit ungefähr den für satellitengetragene SAR-Systeme sinnvollen Blickwinkelbereich wieder.

Tabelle

| Parametername | Formelzeichen | Größe |
|---|---|---|
| **Orbitparameter** | | |
| Inklination | $i$ | 97,44° |
| Exzentrizität | $e$ | 0,001 |
| Wahre Anomalie | $\upsilon$ | 0° - 360° |
| Argument des Perigäums | $\omega$ | 90° |
| Rektaszension des aufsteigenden Knotens | $\Omega$ | 88,617° |
| Argument der Breite | $u = \upsilon + \omega$ | 0° - 360° |
| Große Halbachse des Orbits | $R_E$ | 6892,137 km |
| **Instrumentparameter** | | |
| Streifenbreite-Blickwinkel | $\Theta$ | 18,5° - 49,4° |
| Streifenbreite-Einfallswinkel | $\eta$ | 20° - 55° |
| Wellenlänge | $\lambda$ | 0,031 m |

Wie aus Fig.4 und Fig.5 ersichtlich ist, unterscheidet sich der residuale Dopplerzentroid für einen Großteil des Orbits stark von Null. Der residuale Dopplerzentroid über einen Orbit ist in Fig.4 und Fig.5 jeweils für einen Blickwinkel von 18,5° gestrichelt, für einen Blickwinkel von 33,8° durchgezogen und für einen Blickwinkel von 49,4° strichpunktiert dargestellt. In Fig. 4 ist das Satellitenkoordinatensystem entsprechend dem sogenannten Z-System mit seiner $Z_Z$-Achse auf den Mittelpunkt der Erde ausgerichtet, wogegen es in Fig.5 entsprechend dem sogenannten S-System mit seiner $Z_S$-Achse auf die Flächennormale des Erdellipsoids ausgerichtet ist.

Das Yaw-Steering wird in vorteilhafter Weise für den Mid-Range durchgeführt, um die sich ergebenden residualen Dopplerzentroiden über die gesamte Streifenbreite gering zu halten. Wie in Fig.4 und 5 jeweils in Gestalt der durchgezogenen Linie dargestellt ist, beträgt der Dopplerzentroid für einen Mid-Range-Blickwinkel von 33,8° Null. Für Near-Range und Far-Range jedoch ergibt sich, je nach Steuerung der Radarantenne, ein relativ großer residualer Dopplerzentroid. Dieser liegt im Bereich zwischen ca. $\pm 250$ Hz beim Z-Koordinatensystem (Fig.4) und bei ca. $\pm 1$ kHz im S-Koordinatensystem (Fig.5).

In dem Beitrag von Chang, C. Y., Curlander, J. C.: "Attitude Steering for Space Shuttle Based Synthetic Aperture Radars" in Geoscience and Remote Sensing Symposium, 1992, IGARSS'92 International, 26 - 29 May 1992, Seiten 297-301, ist ein Verfahren zur Verringerung des Dopplerzentroids bei einem kohärenten Impuls-Radarsystem mit synthetischer Apertur beschrieben, das von einer Space-Shuttle-Plattform getragen wird.

Bei diesem bekannten Verfahren wird auf einem Space-Shuttle sowohl der Yaw-Winkel als auch der Pitch-Winkel zugesteuert. Ferner wird der Dopplerzentroid gegenüber dem herkömmlichen Yaw-Steering verringert, was jedoch immer noch mehr oder weniger vom Look-Winkel abhängt.

Des weiteren wird mit diesem bekannten Verfahren der Dopplerzentroid nicht im wesentlichen zu null reduziert. Es verbleibt nämlich stets ein sehr großer residualer Dopplerzentroid, der vom Look-Winkel abhängig ist. Zusätzlich ist der Dopplerzentroid mit dem dort beschriebene Verfahren immer noch von einer Höhenvariation abhängig.

Dieses bekannte Verfahren wurde für den speziellen Fall eines Space-Shuttle abgeleitet.

Der Erfindung liegt die Aufgabe zu Grunde, eine Möglichkeit zu schaffen, um bei einem satellitengetragenen kohärenten Impuls-Radarsystem mit synthetischer Apertur (SAR), das mit seiner Antenne einen Bodenstreifen mit konstanter Fluggeschwindigkeit abtastet, den Dopplerzentroid über die gesamte Streifenbreite im wesentlichen zu Doppler Null zu steuern.

Gemäß der Erfindung, die sich auf ein Verfahren der eingangs genannten Art bezieht, wird diese Aufgabe in vorteilhafter Weise dadurch gelöst, dass bei dem auf der Satellitenplattform betriebenen kohärenten Impuls-Radarsystem mit synthetischer Apertur der Dopplerzentroid über die gesamte Breite des Bodenstreifens auf ein Minimum dadurch reduziert wird, dass die Steuerung des Pitch-Winkels gemäß der Formel

$$\cos(pitch) = \frac{1 + e \cos \upsilon}{\sqrt{1 + e^2 + 2e \cos \upsilon}}$$

und die Steuerung des Yaw-Winkels entweder analytisch gemäß der Formel

$$yaw = \arctan\left(\frac{\sin i \cos u}{N - \cos i}\right)$$

oder gemäß einer numerischen Berechnung des Yaw-Winkels durchgeführt wird, wobei $i$ die Inklination, $e$ die Exzentrizität, $\upsilon$ die wahre Anomalie und $N$ die Anzahl der Umläufe pro Tag darstellen und $u$ für das Argument der geographischen Breite steht und die Summe aus der wahren Anomalie $\upsilon$ und dem Argument $\omega$ des Perigäums bezeichnet, wobei dies für die Verwendung eines Satellitenkoordinatensystems gilt, bei welchem eine Achse in Richtung des Erdmittelpunktes zeigt.

Vorteilhafte Weiterbildungen des Verfahrens nach der Erfindung sind in den unmittelbar oder mittelbar auf den Patentanspruch 1 rückbezogenen Unteransprüchenangegeben.

Eine Verwendung des Verfahrens nach der Erfindung ist im Anspruch 5 angegeben.

Zur Verdeutlichung des Verfahrens nach der Erfindung dienen die beigefügten Zeichnungen. Es zeigen:

Fig.1     die bereits beschriebene Darstellung der Geometrie eines Radars mit synthetischer Apertur (SAR),

Fig.2     die ebenfalls bereits beschriebene schematische Darstellung des sogenannten Z-Satellitenkoordinatensystems,

Fig.3 die gleichfalls schon beschriebene schematische Darstellung des sogenannten S-Satellitenkoordinatensystems,

Fig.4 den Funktionsverlauf des residualen Dopplerzentroids in [Hz] für einen Blickwinkel von 18,5° (gestrichelte Linie)., von 33,8° (durchgehende Linie) und von 49,4° (strichpunktierte Linie) in Abhängigkeit vom Argument der geographischen Breite [Grad] über einen vollen Orbit, wobei das Satellitenkoordinatensystem mit seiner $Z_Z$-Achse auf den Erdmittelpunkt ausgerichtet ist (Z-System in Fig.2),

Fig.5 den Funktionsverlauf des residualen Dopplerzentroids in [Hz] für einen Blickwinkel von 18,5° (gestrichelte Linie), von 33,8° (durchgehende Linie) und von 49,4° (strichpunktierte Linie) in Abhängigkeit vom Argument der Breite [Grad] über einen vollen Orbit, wobei das Satellitenkoordinatensystem mit seiner $Z_S$-Achse auf die Flächennormale des Erdellipsoids ausgerichtet ist (S-System in Fig.3),

Fig.6 einen beispielhaften Funktionsverlauf des Pitch-Winkels [Grad] in Abhängigkeit vom Argument der Breite [Grad] über einen Orbit,

Fig.7 als Beispiel einen Funktionsverlauf des analytisch berechneten Yaw-Winkels [Grad] in Abhängigkeit vom Argument der geographischen Breite [Grad] über einen vollen Orbit,

Fig.8 eine schematische Darstellung eines Satellitenkoordinatensystems, das zur Durchführung eines "Total Zero Doppler Steering" alternativ definiert ist, und

Fig.9 den Verlauf des residualen Dopplerzentroids über einen vollen Orbit für einen Blickwinkel von 18,5° (Near-Range) in den Darstellungen a) und d), für einen Blickwinkel von 33,8° (Mid-Range) in den Darstellungen b) und e) und für einen Blickwinkel von 49,4° (Far-Range) in den Darstellungen c) und f), wobei die Darstellungen

a) bis c) für eine nach links blickende Antenne und die Darstellungen d) bis f) für eine nach rechts blickende Antenne gelten und in allen Darstellungen der Dopplerzentroidverlauf bei analytischer Berechnung von Pitch und Yaw mit durchgezogener Linie und bei analytischer Berechnung von Pitch und numerischer Berechnung von Yaw mit gestrichelter Linie eingezeichnet ist.

Bei der Steuerung auf Doppler Null über die gesamte Streifenbreite gibt es hinsichtlich der zeitlichen Aufeinanderfolge prinzipiell zwei verschiedene Möglichkeiten: Zuerst das Pitch-Steering, dann das Yaw-Steering oder als Alternative zuerst das Yaw-Steering, gefolgt vom Pitch-Steering. Aus bahnmechanischer Sicht ist es vorteilhaft, zuerst das Pitch-Steering auszuführen, da es innerhalb der Bahnebene durchgeführt wird. Deswegen wird im nachfolgenden Beispiel zuerst ein Pitch-Steering durchgeführt, gefolgt von einem Yaw-Steering.

Als Satellitenkoordinatensystem kann entweder das S-System oder das Z-System verwendet werden. Die folgenden Beschreibungen beziehen sich auf das Z-System. Leichte Abweichungen des Dopplerzentroids von 0 Hz können sich aus der Steuergenauigkeit der Antenne und des Satelliten, einer eventuellen Abweichung des Orbits von der elliptischen Bahn, etc. ergeben.

Das Verfahren nach der Erfindung weist eine Reihe von Vorteilen auf.

Innerhalb einer Szene besteht keine bzw. nur eine äußerst geringe Variation des Dopplerzentroids in der Entfernung. Dies erlaubt auch eine einfachere und genauere Dopplerzentroidbestimmung, da über alle Entfernungen gemittelt werden kann.

Es liegt nur ein sehr geringer Dopplerzentroid über den gesamten abgebildeten Streifen am Boden von Near-Range bis Far-Range vor.

Das zusätzliche Pitch-Steering der Satelliten- oder Luftfahrzeugplattform kann innerhalb der Bahnebene durchgeführt werden. Dies ist bahnmechanisch einfacher zu handhaben als Steuerungen, die außerhalb der Bahnebene durchgeführt werden. Zusätzlich wird durch das Pitch-Steering die Satellitenplattform in Flugrichtung ausgerichtet, so dass die für die Drag-Berechnung zu verwendende Querschnittsfläche über den Orbit konstant ist.

Für eine links-blickende und eine rechts-blickende Antenne müssen keine unterschiedlichen mathematischen Formeln verwendet werden, da der Dopplerzentroid für den gesamten Blickwinkelbereich sowohl bei links-blickender als auch bei rechts-blickender Antenne sehr gering ist.

Es ist auch ein "Total Zero Doppler Steering" unter Verwendung des S-Koordinatensystems möglich.

Die Erstellung von SAR-Interferogrammen wird erleichtert, da der Dopplerzentroid in den Ausgangsbildern immer nahezu Null ist und die Dopplerspektren sich somit immer genügend überlappen.

Die Genauigkeit der Koregistrierung wird durch den sehr geringen Dopplerzentroid wesentlich verbessert.

Im ScanSAR-Mode können Scalopping-Filter leichter und effektiver implementiert werden, da in Entfernungsrichtung der Dopplerzentroid nahezu konstant ist.

Eine Näherung des Pitch-Winkels, um den beim Pitch-Steering gedreht wird, wird analytisch berechnet, um das Satellitenkoordinatensystem in der X-Z-Ebene so zu drehen, dass die X-Richtung genau mit dem Geschwindigkeitsvektor zusammenfällt. Dies gilt für den oben genannten Fall, dass zuerst das Pitch-Steering ausgeführt wird.

Der genäherte Pitch-Steuerungswinkel kann folgendermaßen abgeleitet werden:

Mit Hilfe der Keplerelemente wird bekanntlich ein Orbitpunkt vollständig durch seinen Koordinatenvektor beschrieben:

$$\begin{pmatrix} x \\ y \\ z \end{pmatrix} = r \begin{pmatrix} \cos(\omega + \upsilon)\cos\Omega - \sin(\omega + \upsilon)\cos i \sin\Omega \\ \cos(\omega + \upsilon)\sin\Omega + \sin(\omega + \upsilon)\cos i \cos\Omega \\ \sin(\omega + \upsilon)\sin i \end{pmatrix}$$

mit dem Argument des Perigäums $\omega$, der wahren Anomalie $\upsilon$, der Inklination $i$, der Rektaszension des aufsteigenden Knotens $\Omega$ und der Entfernung $r$ des Satelliten vom Gravitationszentrum der Erde. Die zeitveränderliche Entfernung $r$ wird durch

$$r = \frac{a(1 - e^2)}{1 + e\cos\upsilon}$$

beschrieben mit der Exzentrizität e und der großen Halbachse $a$.

Für den Geschwindigkeitsvektor $v$ erhält man durch Differenzieren des oben angegebenen Ortsvektors nach der Zeit

$$v = \begin{pmatrix} \dot{x} \\ \dot{y} \\ \dot{z} \end{pmatrix}$$

$$= -\sqrt{\frac{GM}{a(1 - e^2)}} \begin{pmatrix} \cos\Omega\cos\omega\sin\upsilon + \cos\Omega\sin\omega(\cos\upsilon + e) - \cos i\sin\Omega\sin\omega\sin\upsilon + \cos i\sin\Omega\cos\omega(\cos\upsilon + e) \\ \sin\Omega\cos\omega\sin\upsilon + \sin\Omega\sin\omega(\cos\upsilon + e) + \cos i\cos\Omega\sin\omega\sin\upsilon - \cos i\cos\Omega\cos\omega(\cos\upsilon + e) \\ \sin i\sin\omega\sin\upsilon - \sin i\cos\omega(\cos\upsilon + e) \end{pmatrix}$$

mit dem Gravitationskoeffizienten $GM$ = 398600,4418 km$^3$/s$^2$ und unter Zuhilfenahme der Identität

$$r^2\dot{\upsilon} = \sqrt{GM(1 - e^2)}.$$

Der Winkel $\gamma$ für das Pitch-Steering ergibt sich aus dem Winkel zwischen dem oben angegebenen Geschwindigkeitsvektor $v_e$ eines exzentrischen Orbits und dem Geschwindigkeitsvektor $v_k$ eines kreisförmigen Orbits, für den die obige Formel mit $e = 0$ gilt. Der Winkel $\gamma$ wird wie folgt berechnet:

$$\cos\gamma = \frac{\vec{v}_e \circ \vec{v}_k}{|\vec{v}_e| \cdot |\vec{v}_k|},$$

wobei ° für das Skalarprodukt seht.

Es ergibt sich für den Pitch-Steering-Winkel $\gamma$

$$\cos \gamma = \frac{1 + e \cos \upsilon}{\sqrt{1 + e^2 + 2e \cos \upsilon}},$$

wobei *e* für die Exzentrizität des Satelliten und $\upsilon$ für die wahre Anomalie steht. Wie erwartet, hängt der Pitch-Steering-Winkel weder von der Inklination *i*, der Rektaszension des aufsteigenden Knotens $\Omega$ oder dem Argument $\omega$ des Perigäums ab.

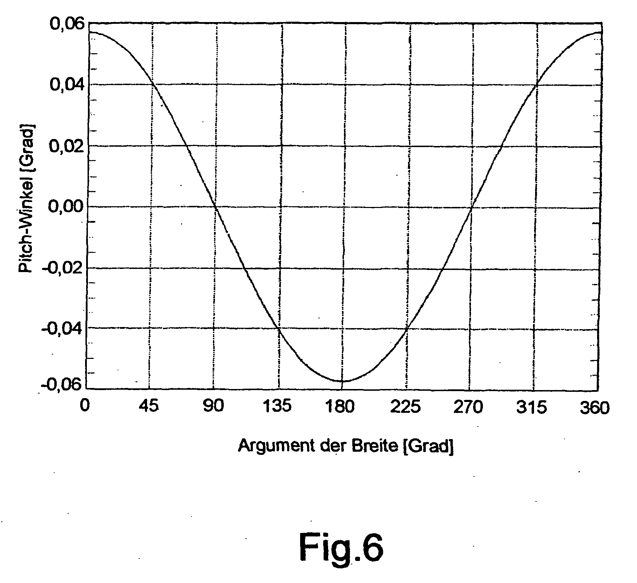

Das Vorzeichen des Pitch-Winkels ist negativ für eine wahre Anomalie $\upsilon$ kleiner als 180° (dies entspricht im gewählten Beispiel einem Argument der geographischen Breite zwischen 90° und 270°) und positiv für eine wahre Anomalie $\upsilon$ zwischen 180° und 360°, wie in Fig.6 zu sehen ist, die in einer Funktionsdarstellung den Pitch-Winkel [Grad] gegen das Argument der Breite [Grad] über einen vollen Orbit zeigt, wobei als Berechnungsgrundlage die Parameter aus der vorher angegebenen Tabelle dienen.

Für das anschließende Yaw-Steering wird die bereits oben beschriebene Näherungsformel

$$yaw = \arctan\left(\frac{\sin i \cos u}{N - \cos i}\right)$$

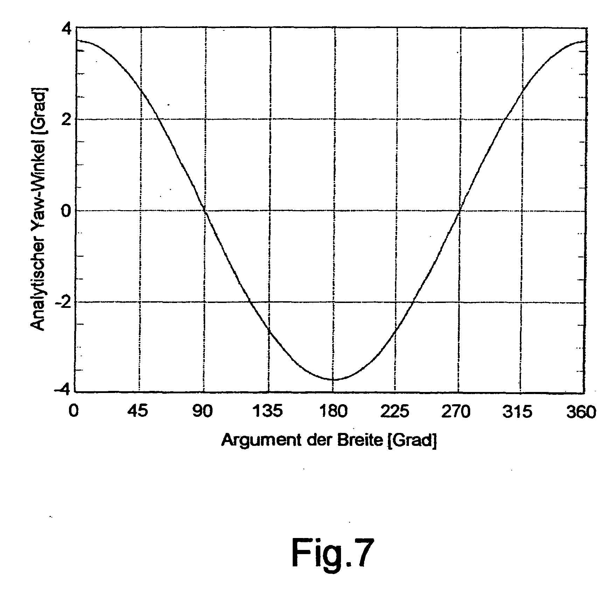

verwendet. Der analytisch berechnete Verlauf des Yaw-Steering-Winkels in [Grad] in Abhängigkeit vom Argument der Breite in [Grad] über einen vollen Orbit ist in Fig.7 zu sehen, wobei als Berechnungsgrundlage ebenfalls die in der vorher dargestellten Tabelle angegebenen Parameter dienen.

Mit dem neuen Verfahren wird der residuale Dopplerzentroid deutlich verringert. Bei Verwendung der angegebenen Formeln, von denen die Formel für den Pitch-Winkel exakt und die Formel für den Yaw-Winkel angenähert ist, ergibt sich ein residualer Dopplerzentroid von ca. $\pm 25$ Hz, was eine deutliche Verbesserung gegenüber dem Stand der Technik darstellt. An dieser Stelle wird angemerkt, dass sich bei numerischer Berechnung des Yaw-Winkels und des Pitch-Winkels ein noch weiter verbesserter residualer Dopplerzentroid von weniger als 0.05 Hz ergibt.

Zur Veranschaulichung werden kurz einige triviale Fälle diskutiert, um somit den Lösungsansatz zu verdeutlichen, welcher dem Verfahren nach der Erfindung zu Grunde liegt. Für die Beispiele werden die Parameter aus der vorher angegebenen Tabelle zu Grunde gelegt. Danach wird eine geeignete Wahl des Satellitenkoordinatensystems vorgeschlagen, um das Yaw-Steering in effizienter Weise durchführen zu können.

Für eine angenommene kugelförmige Erde und einen kreisförmigen Orbit entsteht aufgrund der Erdrotation ein Dopplerzentroid zwischen ca. 10 kHz im Near-Range-Bereich und ca. 24 kHz im Far-Range-Bereich. Durch das herkömmliche Yaw-Steering kann bei dieser Annahme der oben angeführte Dopplerzentroid über die gesamte Streifenbreite ausgeglichen werden. Die residualen Dopplerzentroiden im Near-Range-Bereich und im Far-Range-Bereich sind null. Im Falle der Annahme einer ellipsoiden Erde und eines kreisförmigen Orbits ergeben sich Dopplerzentroid-Resultate in der gleichen Größenordnung.

Im realistischen Fall einer ellipsoiden Erde und eines elliptischen Orbits (Beispielparameter TerraSAR-X) ergibt sich ein residualer Dopplerzentroid in Abhängigkeit von der Entfernung und vom Argument der Breite. Der Dopplerzentroid beträgt für eine Streifenbreite, die einem Blickwinkel-Bereich von 18,5° bis 49,4° entspricht, ca. 10 kHz bis 24 kHz. Wird das herkömmliche Yaw-Steering angewendet so kann der residuale Dopplerzentroid im Near-Range- und Far-Range-Bereich auf ca. $\pm 250$ Hz für das Z-System und ca. $\pm 1$ kHz für das S-System verringert werden, wie bereits vorher beschrieben worden ist.

Es ist erkennbar, dass der residuale Dopplerzentroid aufgrund der Abweichung der x-Richtung des Satellitenkoordinatensystems von der Richtung des Geschwindigkeitsvektors entsteht. Der Ausgangspunkt für das neue Verfahren kann auch so gesehen werden, dass durch das zusätzliche Pitch-Steering das Satellitenkoordinatensystem in der x-z-Ebene gedreht wird, so dass die x-Richtung genau mit dem Geschwindigkeitsvektor zusammenfällt.

Durch eine geeignete alternative Definition des Satellitenkoordinatensystems kann das Pitch-Steering in vorteilhafter Weise bereits dort integriert werden, und es ist somit nur ein Yaw-Steering erforderlich, um den residualen Dopplerzentroiden über die gesamte Streifenbreite auf null zu steuern sowohl für links- als auch für rechts-blickende Systeme.

Wie bereits vorher beschrieben wurde, lässt sich gemäß dem Verfahren nach der Erfindung das Satellitenkoordinatensystem, also z.B. das S-System, durch das zusätzliche Pitch-Steering in der x-z-Ebene so drehen, dass die x-Richtung genau mit dem Geschwindigkeitsvektor V zusammenfällt.

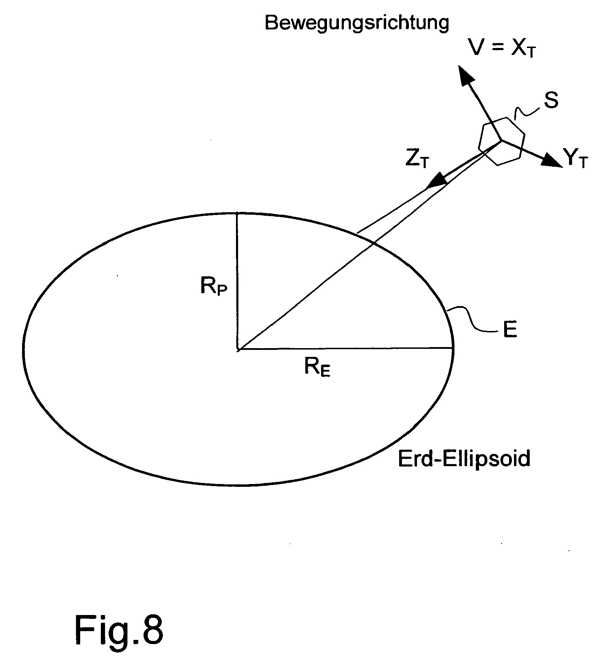

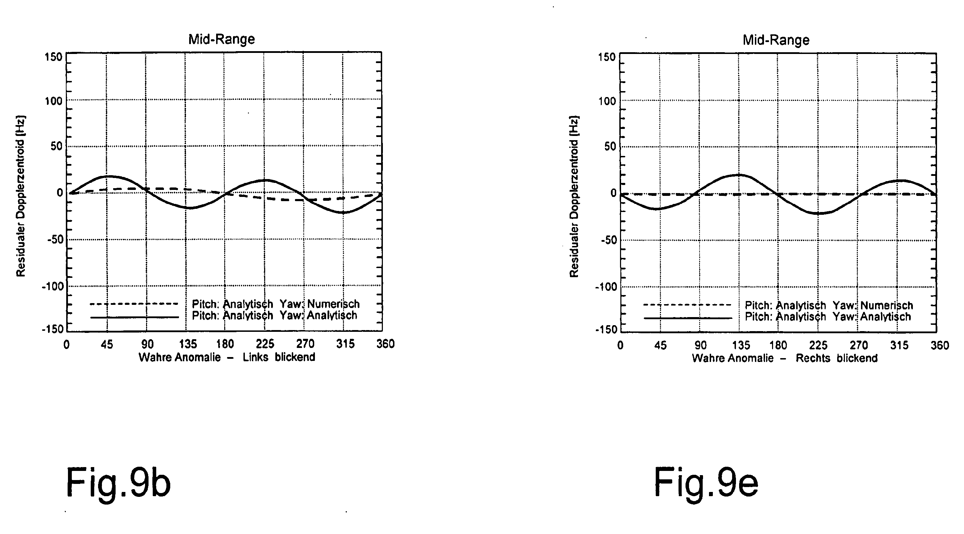

Dies kann, wie Fig.8 zeigt, in vorteilhafter Weise bereits bei der Definition des Koordinatensystems geschehen, indem der Geschwindigkeitsvektor V die $X_T$-Achse des Satellitenkoordinatensystems bildet. Die $Z_T$-Achse befindet sich in der Orbitebene senkrecht zur $X_T$-Achse und die $Y_T$-Achse steht wiederum senkrecht auf der Ebene, die durch die $X_T$-Achse und die $Z_T$-Achse aufgespannt wird, und vervollständigt das kartesische Koordinatensystem. In Fig.8 ist diese alternative Definition des Satellitenkoordinatensystems zur Realisierung eines "Total Zero Doppler Steering" schematisch dargestellt.

Im Folgenden werden Ausführungsbeispiele des neuen Verfahrens und dessen Vorteile gezeigt.

Um die vorher angegebenen Formeln zu bewerten, werden die Parameter aus der vorher angegebenen Tabelle verwendet. Das Yaw-Steering wird hierbei für einen Blickwinkel von 33,8° im Mid-Range-Bereich angenommen.

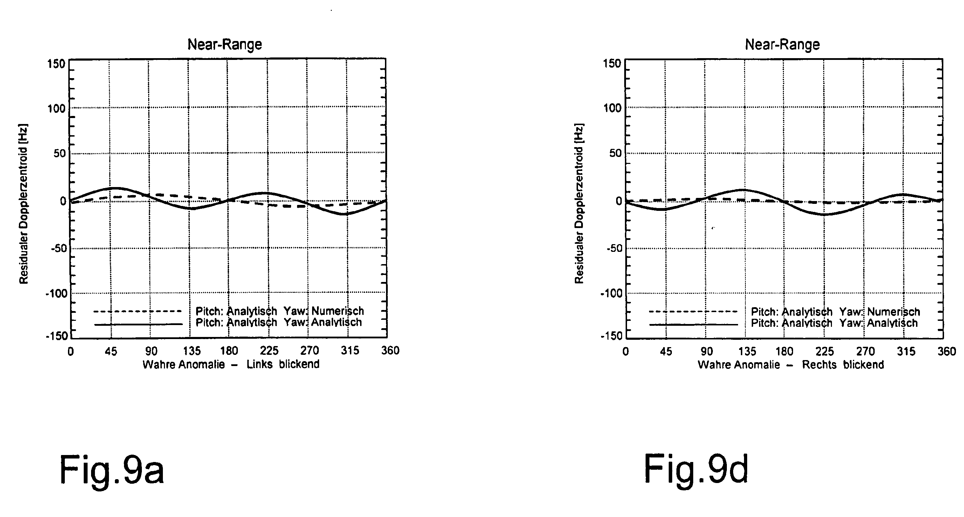

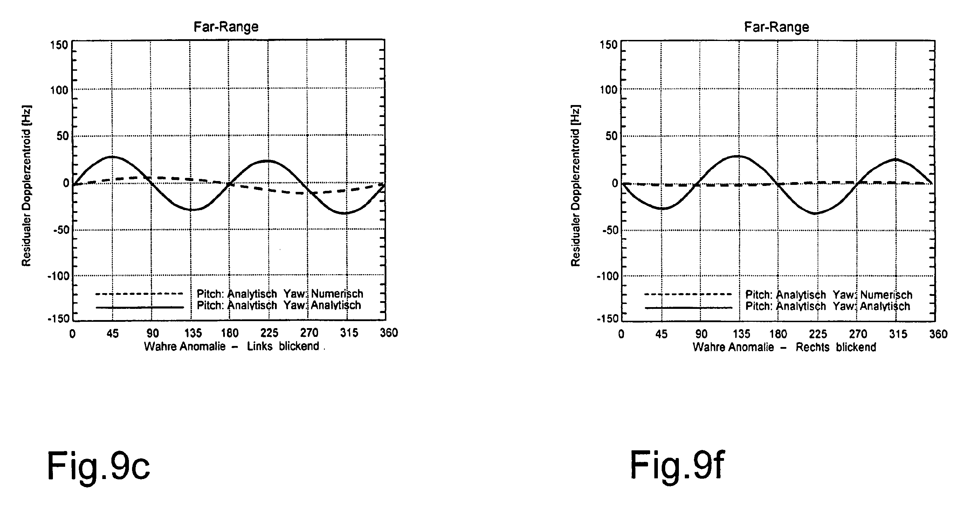

Zuerst wird demonstriert, dass die oben angegebenen Formeln eine gute Näherung darstellen. In Fig.9 ist die Kombination von analytischem und numerischem Yaw-Steering mit Pitch-Steering für Near-Range, Mid-Range und Far-Range dargestellt. Im einzelnen zeigt Fig.9 den Verlauf des residualen Dopplerzentroids über einen Orbit für einen Blickwinkel von 18,5° (Near-Range) in den Darstellungen a) und d), für einen Blickwinkel von 33,8° (Mid-Range) in den Darstellungen b) und e) und für einen Blickwinkel von 49,4° (Far-Range) in den Darstellungen c) und f), wobei die Darstellungen a) bis c) für eine nach links-blickende Antenne und die Darstellungen d) bis f) für eine nach rechts-blickende Antenne gelten. Dieser Blickwinkelbereich entspricht einem Einfallswinkelbereich von 20° bis 55°. Die durchgezogenen Verlaufslinien des Dopplerzentroids in den sechs Darstellungen a) bis f) von Fig.9 beruhen auf einer analytischen Berechnung sowohl des Pitch-Steerings als auch des Yaw-Steerings, während die gestrichelten Verlaufslinien des Dopplerzentroids auf einer analytischen Berechnung des Pitch-Steerings und einer numerischen Berechnung des Yaw-Steerings beruhen.

Bei der numerischen Berechnung wird zu jedem Orbitpunkt der Yaw-Winkel so berechnet, dass dieser einen minimalen residualen Dopplerzentroiden, z.B. $< 10^{-5}$ Hz, zur Folge hat. Mit den in der vorher dargestellten Tabelle angegebenen Orbitparametern wird der residuale Dopplerzentroid berechnet.

Wie sich in Fig.9 unschwierig erkennen lässt, ist eine Näherung durch die oben angegebenen Formeln sinnvoll und ausreichend. Der maximale residuale Dopplerzentroid liegt bei ca. 26 Hz und ist vernachlässigbar. Weiterhin ist aus den obigen Abbildungen ersichtlich, dass der residuale Dopplerzentroid für eine links-blickende und eine rechts-blickende Antenne vorzeichenvertauscht nahezu identisch ist.

Aufgrund der verschiedenen Tangentialgeschwindigkeiten auf der Erdoberfläche innerhalb des beleuchteten Streifens wird eine weitere minimale Änderung hervorgerufen, die hier allerdings zu vernachlässigen ist. Sie könnte in zweckmäßiger Weise auch durch eine verbesserte Formel des Yaw-Steerings abgefangen werden.

Das gemäß der Erfindung arbeitende Verfahren kann auch für eine Minimierung der Variation des Dopplerzentroids in einem luft- oder raumgestützten Squint SAR-System eingesetzt werden. Ferner kann das Verfahren auch für andere Arten von kohärenten Radarsystemen als solche mit synthetischer Apertur verwendet werden. Es lässt sich beispielsweise in vorteilhafter Weise auch bei Fernerkundungsradarsystemen einsetzen, die mit realer Apertur betrieben werden, wie z.B. für ein Altimeter zur Abstandsmessung zwischen Trägerplattform und Boden, für ein Scatterometer zur Ermittlung der Bodenbeschaffenheit oder der Rauhigkeit des Meeres oder für ein Wetterradar zur Ermittlung der Bewölkungs- und sonstigen Wettergegebenheiten.

Als Träger kommen alle möglichen Plattformen in Betracht, wie z.B. Satelliten, Shuttles, Flugzeuge, Drohnen etc. Die Steuerung der Pitch- und Yaw-Winkel kann durch die Änderung der Plattformlage und/oder durch die elektronische und/oder mechanische Steuerung der Radarantenne selbst erfolgen.

Bezugszeichenliste

| | |
|---|---|
| B | Streifenbreite |
| E | Erd-Ellipsoid |
| $R_P, R_E$ | Halbachsen |
| S | Satellit |
| V | Bewegungsrichtung |
| x,y,z | Satellitenkoordinatensystem |
| $X_S,Y_S,Z_S$ | Satellitenkoordinatensystem |
| $X_T,Y_T,Z_T$ | Satellitenkoordinatensystem |
| $X_Z,Y_Z,Z_Z$ | Satellitenkoordinatensystem |
| $\eta, \eta_{near}, \eta_{far}$ | Einfallswinkel |
| $\theta, \theta_{near}, \theta_{far}$ | Blickwinkel |

**Patentansprüche**

1. Verfahren zur Verringerung des Dopplerzentroids bei einem kohärenten Impuls-Radarsystem mit synthetischer Apertur, das von einer sich bewegenden Satellitenplattform getragen wird und mit seiner Radarantenne einen Bodenstreifens mit zumindest annähernd konstanter Fluggeschwindigkeit abtastet, unter Verwendung sowohl einer Yaw-Winkel-Steuerung als auch einer Pitch-Winkel-Steuerung, **dadurch gekennzeichnet, dass** bei dem auf der Satellitenplattform betriebenen kohärenten Impuls-Radarsystem mit synthetischer Apertur der Dopplerzentroid über die gesamte Breite des Bodenstreifens auf ein Minimum dadurch reduziert wird, dass die Steuerung des Pitch-Winkels gemäß der Formel

$$\cos(pitch) = \frac{1 + e \cos \upsilon}{\sqrt{1 + e^2 + 2e \cos \upsilon}}$$

und die Steuerung des Yaw-Winkels entweder analytisch gemäß der Formel

$$yaw = \arctan\left(\frac{\sin i \cos u}{N - \cos i}\right)$$

oder gemäß einer numerischen Berechnung des Yaw-Winkels durchgeführt wird, wobei *i* die Inklination, *e* die Exzentrizität, $\upsilon$ die wahre Anomalie und *N* die Anzahl der Umläufe pro Tag darstellen und *u* für das Argument der geographischen Breite steht und die Summe aus der wahren Anomalie $\upsilon$ und dem Argument $\omega$ des Perigäums bezeichnet, wobei dies für die Verwendung eines Satellitenkoordinatensystems gilt, bei welchem eine Achse in Richtung des Erdmittelpunktes zeigt.

2. Verfahren nach Anspruch 1, **dadurch gekennzeichnet, dass** die Steuerung des Yaw- und/oder Pitch-Ninkels durch eine mechanische Änderung der Lage der Radarantenne und/oder durch elektronische Steuerung der Radarantenne vorgenommen wird.

3. Verfahren nach Anspruch 1, **dadurch gekennzeichnet, dass** die Steuerung des Yaw- und/oder Pitch-Winkels durch eine Änderung der Plattformlage vorgenommen wird.

4. Verfahren nach Anspruch 1, **dadurch gekennzeichnet, dass** zuerst die Steuerung des Pitch-Winkels und danach die Steuerung des Yaw-Winkels vorgenommen wird.

5. Verwendung des Verfahrens nach einem der vorhergehenden Ansprüche zur Fernerkundung der Erdoberfläche.

**Claims**

1. A method for reducing the Doppler centroid in a coherent pulsed radar system with synthetic aperture, said system being supported by a moving satellite platform and provided to scan a ground strip at an at least approximately constant flight speed by use of its radar antenna, said method being performed using both yaw angle control and pitch angle control,
**characterized in that**, in said coherent pulsed radar system with synthetic aperture that is operated on the satellite platform, the Doppler centroid is reduced to a minimum across the whole with of the ground strip by performing the controlling of the pitch angle corresponding to the formula

$$\cos(pitch) = \frac{1 + e \cos \upsilon}{\sqrt{1 + e^2 + 2e \cos \upsilon}}$$

and performing the controlling of the yaw angle either analytically corresponding to the formula

$$yaw = \arctan\left(\frac{\sin i \cos u}{N - \cos i}\right)$$

or according to a numerical computation of the yaw angle, with i representing the inclination, e the eccentricity, $\upsilon$ the true anomaly and $N$ the number of rotations per day, and with $u$ representing the argument of the geographic width and denoting the sum of the true anomaly $\upsilon$ and the argument $\omega$ of the perigee, the above applying for the use of a satellite coordinate system wherein one axis is oriented in the direction of the center of the earth.

2. The method according to claim 1, **characterized in that** the controlling of the yaw and/or pitch angle is performed by mechanically changing the orientation of the radar antenna and/or by electronic control of the radar antenna.

3. The method according to claim 1, **characterized in that** the controlling of the yaw and/or pitch angle is performed by changing the orientation of the platform.

4. The method according to claim 1, **characterized in that** the controlling of the pitch angle is performed first and the controlling of the yaw angle is performed thereafter.

5. Use of the method according to any one of the previous claims for remote investigation of the surface of the earth.

**Revendications**

1. Procédé destiné à réduire le centroïde doppler dans le cadre d'un système radar cohérent à impulsion avec une ouverture synthétique, lequel est porté par une plate-forme satellite se déplaçant et balaie avec une vitesse de vol au moins approximativement constante une bande au sol à l'aide de son antenne radar, en utilisant aussi bien une commande d'angle de lacet qu'une commande d'angle de tangage, **caractérisé en ce que**, dans le cadre du système radar cohérent à impulsion avec l'ouverture synthétique fonctionnant sur la plate-forme satellite, le centroïde doppler est réduit à un minimum sur l'ensemble de la largeur de la bande au sol, **en ce que** la commande de l'angle d e tangage est réalisée d'après la formule

$$cos(tangage) = \frac{1 + e \cos \upsilon}{\sqrt{1 + e^2 + 2e \cos \upsilon}}$$

et que la commande de l'angle de lacet est réalisée soit de manière analytique d'après la formule

$$lacet = \arctan\left(\frac{\sin i \cos u}{N - \cos i}\right)$$

soit d'après un calcul numérique de l'angle de lacet, $i$ représentant l'inclinaison, $e$ l'excentricité, $\upsilon$ l'anomalie vraie et $N$ le nombre de rotations par jour, et $u$ correspondant à l'argument de la latitude et définissant la somme de l'anomalie vraie $\upsilon$ et de l'argument $\omega$ du périastre, sachant que ceci s'applique pour l'utilisation d'un système de coordonnées satellite, dans lequel un axe pointe dans la direction du point central de la terre.

2. Procédé selon la revendication 1, **caractérisé en ce que** la commande de l'angle de lacet et/ou de l'angle de tangage est effectuée par un changement mécanique de la position de l'antenne radar et/ou par la commande électronique de l'antenne radar.

3. Procédé selon la revendication 1, **caractérisé en ce que** la commande de l'angle de lacet et/ou de l'angle de tangage est effectuée par un changement de la position de la plate-forme.

**4.** Procédé selon la revendication 1, **caractérisé en ce qu'**en premier lieu la commande de l'angle de tangage est effectuée et qu'ensuite la commande de l'angle de lacet est effectuée.

**5.** Utilisation du procédé selon l'une quelconque des revendications précédentes destinée à la télédétection de la surface de la terre.

Bewegungsrichtung V = Azimutrichtung

V

X

⊙    Blickwinkel der Antenne

η    Einfallswinkel

y

$\Theta_{far}$

z

$\eta_{near}$

$\Theta_{near}$

$\eta_{far}$

E

Streifenbreite B

Erd –Ellipsoid

Azimutrichtung

Near Range

Mid Range

Far Range

Entfernungsrichtung

# Fig.1

Fig.2

Bewegungsrichtung

Erd-Ellipsoid

Fig.3

Fig.4

Fig.5

Fig.6

Fig.7

Fig.8

Fig.9d

Fig.9a

19

Fig.9e

Fig.9b

Fig.9c

Fig.9f

EP 1 515 159 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BEITRAG VON CHANG, C. Y. ; CURLANDER, J. C.** Attitude Steering for Space Shuttle Based Synthetic Aperture Radars. *Geoscience and Remote Sensing Symposium,* 26. Mai 1992, 297-301